# EUROPEAN PATENT APPLICATION

(11) **EP 2 147 983 A1**
(43) Date of publication of application: **27.01.2010**
(21) Application number: 08385003.2
(22) Date of filing: 21.07.2008
(51) Int. Cl.: C21D 1/10, H05B 6/10, H05B 6/40

(54) **Inductive heating converter comprising a resonant circuit with simultaneous multi-frequency current output and at least two inverters**

(71) Applicant: GH Electrotermia, S.A., 46184 San Antonio de Benageber (ES)
(72) Inventor: Esteve Gomez, Vicente, 46100 Burjasot (ES); Jordan Martinez, Jose, 46100 Burjasot (ES); Dede Garcia-Santamaria, Enrique J., 46100 Burjasot (ES); Magraner Caceres, Jose Miguel, 46184 San Antonio de Benageber ( Valencia) (ES); Cases Sanchis, Cesar, 46184 San Antonio de Benageber (Valencia) (ES)

(57) **Abstract**

An induction heating converter whose input is connected to the electrical mains (1) and which has at least two inverters (3,4) supplied by a single voltage source, whose outputs are connected to a resonant circuit (5) of at least three reactive components able to generate a current produced by simultaneously superimposing at least two different frequencies. This current supplies a single coil in order to generate a magnetic field enabling multi-frequency induction heating processes. The converter has a block for auxiliary power supply, regulation, supervision, display, cooling and communication (7). The proposed system enables independent power regulation of each of the different frequencies. It can be applied, amongst other uses, to induction heating of complex surface workpieces such as gearwheels or sprockets.

## Description

### OBJECT OF THE INVENTION

This invention, as described in the heading of this descriptive report, refers to a converter consisting of at least two inverters with outputs of at least two simultaneous frequencies for induction heating, whose essential purpose is to provide a system able to generate a current produced by superimposing at least two currents of different frequencies, so that this current can feed a single coil generating a magnetic field allowing induction heating processes, and to be able to independently regulate the power of each of the different frequencies of the said current, being useful for induction heating of workpieces with complex surfaces such as gears or sprockets. For this purpose, the invention provides an apparatus consisting of a single converter connected to the electrical mains, containing at least two inverters fed by the same voltage, whose outputs are connected to a resonant circuit of at least three reactive components able to generate a current produced by simultaneously superimposing at least two currents of different frequencies. The solution put forward by the present invention ensures a considerable reduction in the costs of the equipment, through being a single converter, and also of production times, through not requiring any movement or additional transport during the heat treatment process. The technical field to which the invention belongs is that of induction heating and its applications are, amongst others, industrial inductive hardening of workpieces with complex surfaces such as gearwheels, toothed wheels and other items with complex surfaces used in the automobile industry.

### BACKGROUND TO THE INVENTION

Heat treatment for hardening metal workpieces with non-uniform cylindrical shapes requires multi-frequency induction heating processes to thus ensure uniform hardening depth in the surface of the corresponding piece. Conventional induction hardening of uneven cylindrical surface parts is done by means of two sequential heating processes. High frequency currents are used to heat up the surfaces of the part closest to the heating inductor. In a separate heating process medium frequency current is used to heat up the almost cylindrical surface of the part. In the event of the part to be hardened being a gearwheel or a sprocket, the high frequency current is used to provide proper treatment for the tip and the flanges of the teeth and the medium frequency hardens the surface of the space between the teeth. With this approach a uniform surface treatment is ensured with the condition that the total cycle time is sufficiently short to prevent any excessive diffusion of the heat generated during the heating processes. This traditional process involves the use of two complete sets of converters generating the high and medium frequency currents, two output resonant circuits, two inductors and an additional transport system.

One improvement on this technique can be achieved by installing a switching system which enables successively and repeatedly connecting the components needed to run the system at the frequency required in each case. This solution is described in the patent entitled "Power source device" by Y. Horiuchi (EP0295099). Another patent entitled "Cyclical, multiple frequency high-frequency induction heating apparatus" by Sawa Kunihico (US4755668) describes another similar invention in which the switching of the circuit components are not included.

The treatment obtained by means of the cyclic processes described above can be optimised if a single process could be performed in which it should be possible to simultaneously generate the high and medium frequency currents feeding a single inductor. This solution provides a considerable reduction in the total cycle time for hardening the part. Several solutions in this approach have been described in previous patents such as: "Inductor type furnace" by E. Northrup (US1852215), "Method and device for surface hardening of rotation symmetrical parts through inductive heating by means of at least two different frequencies" by L. Markegrad and W. Schwenk (EP0525207) and "Inductive heating device of workpieces" by W. Schwenk, A. Häussler and A. Helliger (EP1363474) in which the output current is obtained by means of two complete separate converters with inverters fitted with IGBT transistors, one of these running at high frequency and the other at medium frequency, connected to a single heating inductor through appropriately designed resonant circuits in order to enable parallel connection of the output of both converters.

These state of the art solutions are considerably different from the one presented in this invention mainly because they only envisage the possibility of superimposing two currents of different frequency at the output, because they use two complete converters with two direct voltage (DC) power supplies feeding each inverter, and because they involve disadvantages as regards the high cost and complexity of the equipment or excessive production time.

### DESCRIPTION OF THE INVENTION

To attain these objectives and rule out the disadvantages stated above, the invention consists of a single converter with simultaneous multi-frequency output for induction heating by means of which heat treatments for complex cylindrical profiles can be performed.

One innovation involved in this invention is that its equipment has at least two inverters powered by the same power supply obtained by means of a single rectifier for rectification of the mains voltage, and a single resonant circuit with at least three reactive components containing a single heating inductor whose current is the result of superimposing at least two currents of different frequencies.

According to the preferential embodiment of the invention, its equipment is structured in a single converter which has a non-controlled three-phase rectifier bridge input circuit, with a high value capacitor connected at its output and at least two inverter circuits with a full bridge structure with four switches that are unidirectional in voltage and bidirectional in current, which are connected with a single resonant circuit including the heating coil; the system also includes a block for auxiliary power supply, regulation, supervision, display, cooling and communication.

According to the present invention, the two frequencies present in the heating coil are superimposed by coupling the outputs of each inverter in the resonant circuit with cooled flexible cables.

The converter of this invention, as described, has independent power regulation for each of its outputs. This independent regulation is done by frequency modulation of each of the inverter circuits. The output resonance circuit of at least three reactive items, has two or more resonant frequencies in which its impedance is minimum and each of these determines the minimum operating frequency of each inverter. The power supplied by each inverter is at the maximum level when its frequency is sufficiently close to the resonant frequency of its output resonant circuit. The power of each inverter is gradually reduced as its operating frequency increases.

With the configuration that has been described, this invention provides all the advantages meant by devices whose operation is based on what was stated in the background section of the invention, such as the controllability and repeatability of the process, the time reduction in the process cycle and the uniformity of the heat treatment, obtaining current necessary for feeding a single heating coil with at least two frequencies simultaneously. The invention also provides additional advantages such as reducing the complexity, the cost and the volume of the installation, improving the power efficiency and the reduction of production times.

Hereafter, to facilitate better understanding of this descriptive report and forming an integral part of this, figures are adjoined in which the object of the invention is represented for illustration purposes without constituting any limitation thereto.

### SHORT DESCRIPTION OF THE FIGURES

**Figure 1****.**- Represents a functional block diagram of an apparatus with simultaneous multi-frequency output for induction heating set up according to this invention.
**Figure 2****.**- Represents a basic electronic diagram of the converter shown in previous figure 1 for an embodiment which contains two inverters supplied with the same voltage.
**Figure 3****.**- Represents the main waveform at the output of the converter referred to the above figure.

### DESCRIPTION OF AN EXAMPLE OF AN EMBODIMENT OF THE INVENTION

A description of an example of the invention, referring to the numbering used in the figures is now given.

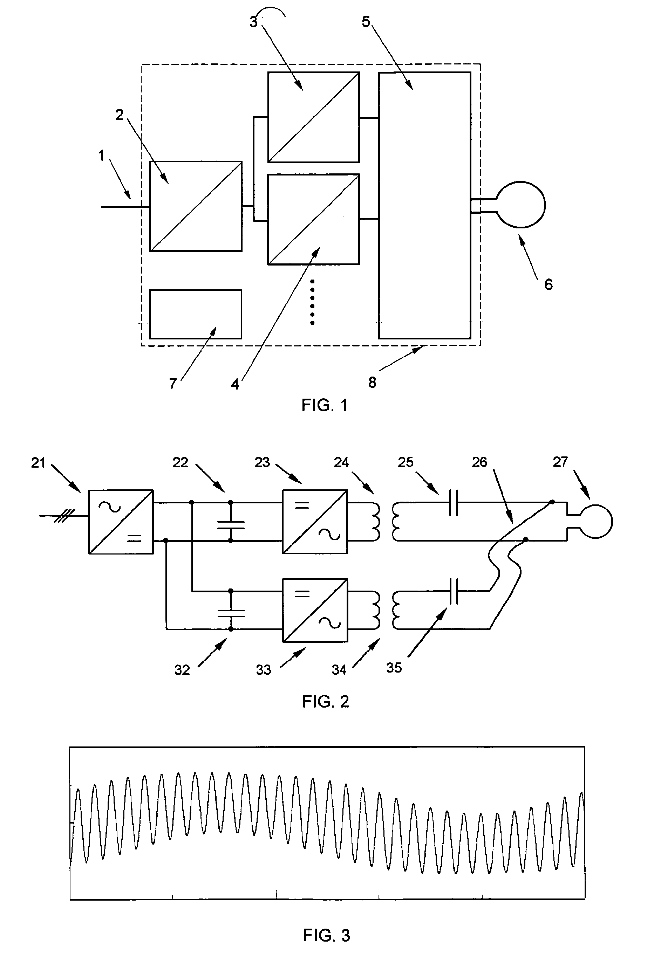

The invention is an electronic system consisting of a converter which has, as shown in Figure 1, a rectifier circuit 2 for rectification of the electrical mains supply 1, at least two inverter circuits 3 and 4, a single output resonant circuit 5, containing a heating inductor 6, and a block for auxiliary supply, regulation, supervision, display, cooling and communication 7, required for the system to run properly. These blocks forming an electronic apparatus 8 that can be made in a single cabinet or unit. The proposed system enables independent power regulation of each of the different frequency components present at the output.

In the preferential embodiment of the invention this will be placed in a cabinet in which all the circuits corresponding to the functional blocks mentioned above are distributed, as well as the cooling items necessary for the power circuits. Its dimensions functionally depend on the nominal output power of the converter. In the external panels of the cabinet there are the connections with the electrical supply mains 1 and with the heating inductor 6, the connectors corresponding to the circuits for auxiliary supply, regulation, supervision and communication and the items for input and output of the cooling fluid, which will be air or water depending on the nominal power of the system.

The electronic diagram of an embodiment, in the event of using two inverters, is represented in Figure 2. The input circuit, a non-controlled three-phase rectifier bridge-type 21, with high value capacitors 22 and 32 at its output, is used to convert the voltage of the electrical distribution network. Hence the set of items mentioned above can act as a direct voltage source to supply the inverter circuits 23 and 33 with a complete bridge structure consisting of four switches that are unidirectional in voltage and bidirectional in current. The upper inverter 23 has the task of generating the high frequency current and for this purpose the transistors forming each of its four switches are MOSFET technology items. The lower inverter 33 is for generating the medium frequency current, for which purpose the transistors forming each of its four switches are IGBT technology items. At the output of the inverters a single three reactive element resonant circuit is connected, including the heating coil, with two pairs of power terminals and two appropriately chosen resonances which determine the medium and high frequencies which are simultaneously combined in the heating inductor 27. The transformers 24 and 34 are used as devices for adapting the impedances and as galvanic isolation.

The medium frequency voltage at the terminals of the heating inductor is obtained by tuning the switching frequency of the medium frequency inverter 33 to the resonance frequency determined by the medium frequency capacitor 35 and the series combination of the inductance of the cooled flexible cable 26 and the heating inductor 27. The high frequency component is obtained by tuning the switching frequency of the high frequency inverter 23 to the resonance frequency determined by the high frequency capacitor 25 and the series combination of the inductances of the connections and that of the heating inductor 27.

The waveform of the voltage or the current produced to the heating inductor is shown in Figure 3. The regulation of the amplitude of the medium and high frequency currents in the heating inductor is done by means of frequency modulating techniques, properly and continuously regulating the switching frequencies of each of the inverters. Both power regulation systems are independent.

## Claims

1. **CONVERTER WITH SIMULTANEOUS MULTI-FREQUENCY OUTPUT FOR INDUCTION HEATING,** wherein this has a single converter (8) consisting of a single rectifier circuit (2) with at least two inverter circuits (3 and 4) supplied by a single voltage, and a single resonant circuit (5) of at least three reactive components containing a single heating inductor (6) whose current is produced by superimposing at least a further two currents of different frequencies regulated by the control block (7), applying the resulting current to a single coil (6) to generate a magnetic field enabling induction heating processes.

2. **CONVERTER WITH SIMULTANEOUS MULTI-FREQUENCY OUTPUT FOR INDUCTION HEATING**, according to claim 1, wherein this has a single non-controlled three-phase rectifier bridge input circuit (21) with high value capacitors (22 and 32) connected to its output and at least two inverter circuits (23 and 33) with full bridge structure consisting of four switches with unidirectional voltage and bidirectional current.

3. **CONVERTER WITH SIMULTANEOUS MULTI-FREQUENCY OUTPUT FOR INDUCTION HEATING**, according to claim 1, wherein the combination of at least two frequencies present in the heating inductor is done by connecting the outputs of at least two inverters to a single circuit of at least three reactive components including the heating inductor (27) with at least two resonance frequencies.

4. **CONVERTER WITH SIMULTANEOUS MULTI-FREQUENCY OUTPUT FOR INDUCTION HEATING**, according to claims 1 and 3, wherein the resonant output circuit has cooled flexible cables (26) which are used to connect and couple the outputs of the resonant capacitors (25 and 35) to the heating inductor (27).

5. **CONVERTER WITH SIMULTANEOUS MULTI-FREQUENCY OUTPUT FOR INDUCTION HEATING,** according to any of the previous claims, wherein the transistors forming each of the four switches of the medium frequency inverters are IGBT technology items.

6. **CONVERTER WITH SIMULTANEOUS MULTI-FREQUENCY OUTPUT FOR INDUCTION HEATING**, according to any of the previous claims, wherein the transistors forming each of the four switches of the high frequency inverters are MOSFET technology items.

7. **CONVERTER WITH SIMULTANEOUS MULTI-FREQUENCY OUTPUT FOR INDUCTION HEATING,** according to any of the previous claims, wherein the power of each of the different frequency outputs can be independently regulated. This regulation is performed by the individual and automatic modulation of the switching frequency of each inverter circuit.
